# FASCICULE DE BREVET EUROPEEN

(11) **EP 2 683 123 B1**
(45) Date de publication et mention de la délivrance du brevet: **12.08.2015**
(21) Numéro de dépôt: 13174517.6
(22) Date de dépôt: 01.07.2013
(51) Int. Cl.: H04L 12/66

(54) **Passerelle de gestion de flux pour réseau machine à machine**
Datenfluss-Verwaltungsschnittstelle für Maschine-zu-Maschine-Kommunikationsnetz
Flow management gateway for machine-to-machine network

(30) Priorité: 03.07.2012 FR 1256349
(43) Date de publication de la demande: 08.01.2014
(73) Titulaire: Commissariat à l'Énergie Atomique et aux Énergies Alternatives, 75015 Paris (FR)
(72) Inventeur: Calvanese Strinati, Emilio, 38000 Grenoble (FR)
(74) Mandataire: Augarde, Eric

(56) Documents cités:
- EP-A1- 2 466 791
- VODAFONE: "M2M: Small data transmission using optimised SMS", 3GPP DRAFT; S2-112766 SMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 22 mai 2011 (2011-05-22), XP050525733,

## Description

### DOMAINE TECHNIQUE

La présente invention concerne de manière générale les systèmes de communication machine à machine (M2M) et plus particulièrement une passerelle pour un réseau M2M et un réseau cellulaire.

### ÉTAT DE LA TECHNIQUE ANTÉRIEURE

Les communications machine à machine, encore dénommées communications de type machine ou MTC (*Machine Type Communications*) permettent à des dispositifs tels que des capteurs, compteurs ou détecteurs de communiquer directement entre eux et/ou avec à un serveur distant. Un exemple classique de communication M2M est un réseau de détecteurs (intrusion, incendie) transmettant des informations vers un serveur de surveillance distant.

Les différents dispositifs (ou machines) d'un système de communication MTC sont généralement organisés sous forme d'un réseau, dit réseau capillaire, dans lequel les informations sont routées sous forme de paquets, d'un dispositif à l'autre au moyen de sauts multiples (*multihop*). Dans les systèmes de communication M2M récents, le réseau capillaire est relié à un système de télécommunication cellulaire au moyen d'une passerelle encore dénommée passerelle MTC (*MTC gateway*) ou passerelle capillaire (*capillary gateway*).

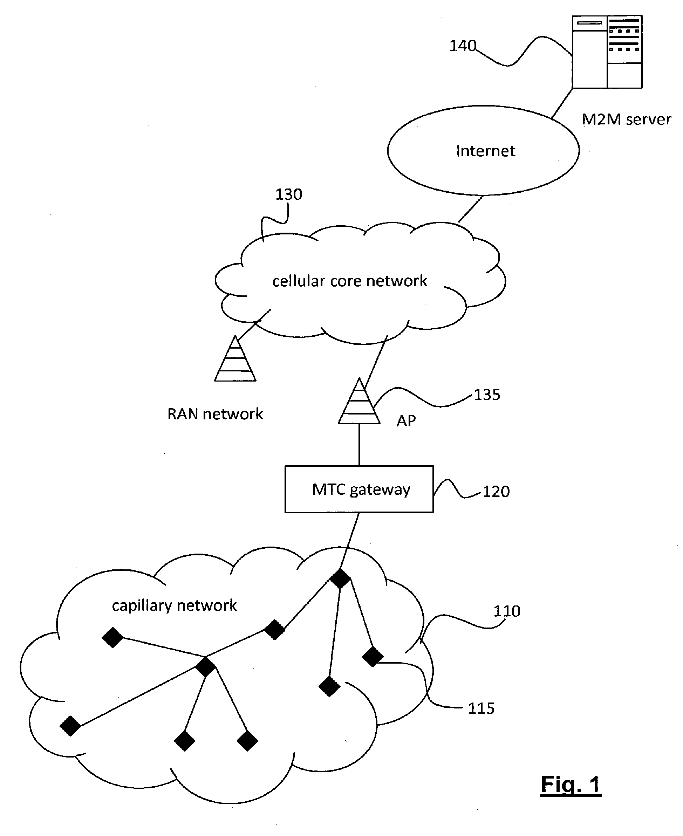

La Fig. 1 représente de manière schématique une architecture d'un système de communication MTC.

Ce système comprend une pluralité de dispositifs, 115, par exemple des capteurs, actuateurs, compteurs, étiquettes RFID, détecteurs etc., organisés sous la forme d'un réseau capillaire 110. Ce réseau est relié à un point d'accès, 135, (par exemple station de base, borne d'accès, eNode B dans un réseau LTE, etc.) d'un système de communication cellulaire 130, à l'aide d'une passerelle MTC, 120. Les dispositifs 115 peuvent transmettre des paquets de données (dénommés dans la suite simplement « paquets ») d'un serveur applicatif distant (M2M server), 140, via le système de communication cellulaire et le réseau Internet 150. Le cas échéant, ces dispositifs peuvent également recevoir des paquets de données sur la voie descendante.

Le système de communication cellulaire 130 peut être un système de troisième, voire de quatrième génération tel qu'un réseau 3GPP LTE (*Long Term Evolution*) ou un réseau WiMax.

On rappelle que le réseau LTE, en cours de déploiement, utilise une répartition d'accès par intervalles de sous-porteuses (*frequency chunks*) d'un muliplex OFDM (*Orthogonal Frequency Division Multiplexing*) ainsi des systèmes d'antennes MIMO (*Multiple Input Multiple Output*). Il fournira des communications de haute qualité de service, à large bande et faible latence. En particulier, le réseau LTE devrait permettre de bénéficier de services mobiles large bande tels que la video mobile ou l'Internet mobile à haut débit.

A l'inverse, les communications M2M sont généralement sporadiques et à faibles débits moyens. Les caractéristiques de trafic de certaines communications M2M ont fait l'objet d'une évaluation et d'une modélisation dans la thèse d'A. Oswald intitulée « M2M traffic characteristics », Master of Science Thesis, Stockholm, Sweden 2009. Les capteurs envisagés dans cet ouvrage sont des capteurs de détection pour la surveillance ou des capteurs de fuite d'eau. Les capteurs sont pour la plupart du temps en mode veille et ne transmettent que de faibles quantités de données pour signaler au reste du réseau qu'ils sont en bon état de fonctionnement. En revanche, dès lors qu'une alarme est déclenchée ou qu'un événement intervient, les capteurs peuvent envoyer des salves de données (*burst traffic*).

Bien que le débit moyen d'une communication MTC soit faible, le très grand nombre de dispositifs M2M déployés peut conduire à une situation de congestion en certains points du réseau LTE et pénaliser par conséquent les autres communications.

Le but principal de la présente invention est d'assurer une compatibilité entre les communications MTC et un réseau 3GPP LTE, et de manière plus générale d'interfacer un réseau capillaire MTC à un réseau cellulaire en évitant les risques de congestion.

Une première solution à ce problème est de prévoir plusieurs catégories de flux M2M, comme proposé dans la demande US2012/0117140, et de considérer la passerelle MTC comme un cas particulier d'équipement utilisateur ou UE (*User Equipment*) du réseau cellulaire. Toutefois la grande disparité de caractéristiques des communications MTC, très dépendantes de l'application M2M considérée, rend la gestion de ces trafics particulièrement complexe.

D'autre part, les communications MTC présentent, en général, un fort degré de récurrence qui les rend facilement repérables dans le réseau et par conséquent vulnérables aux attaques. Un encryptage des communications, tant au niveau de la couche physique qu'au niveau de la couche session, par exemple au moyen d'un protocole de sécurisation SSL (*Secure Sockets Layer*) permet certes d'améliorer sensiblement la sécurité de ces communications mais l'encryptage ne modifie pas les caractéristiques du flux. Ainsi, une analyse de trafic sur le réseau peut permettre d'identifier relativement aisément ces communications et faciliter une attaque ciblée en dépit de l'encryptage des paquets.

Un but subsidiaire de la présente invention est par conséquent d'améliorer la sécurité des communications MTC.

### EXPOSÉ DE L'INVENTION

La présente invention est définie comme une passerelle pour interfacer un réseau capillaire de dispositifs communicants avec un point d'accès d'un réseau cellulaire, ladite passerelle comprenant :
- une pluralité de buffers d'entrée destinés à stocker des paquets, dits paquets élémentaires, issus des dispositifs communicants ;
- une pluralité de buffers de sortie destinés à stocker des paquets composites, lesdits paquets composites étant formés par agrégation de paquets élémentaires, chaque buffer de sortie étant associé à un type de flux du réseau cellulaire ;
- des moyens de régulation de flux déterminant, pour chaque buffer de sortie, des paramètres de taille et/ou de temps de transmission des paquets composites de manière à ce que le flux de ces paquets soit conforme au type de flux du réseau cellulaire associé au buffer de sortie ;
- des moyens de multiplexage pour transférer et agréger des paquets élémentaires, stockés dans les buffers d'entrée, sous forme de paquets composites ayant les paramètres déterminés par les moyens de régulation de flux ;
- des moyens d'ordonnancement pour transmettre les paquets composites au moyen de ressources de transmission du réseau cellulaire.

Avantageusement, les moyens de régulation de flux déterminent la taille des paquets composites et les instants auxquels ils doivent être transmis en fonction de paramètres déterministes ou aléatoires d'un flux du réseau cellulaire.

Le type de flux du réseau cellulaire appartient par exemple à un ensemble constitué par : VoIP, NRTV, http, FTP, « video streaming », « gaming ».

Selon une première variante, les moyens de multiplexage forment un paquet composite en agrégeant des paquets élémentaires et complètent ce paquet à l'aide de bits de bourrage pour obtenir la taille déterminée par les moyens de régulation de flux.

Alternativement, selon une seconde variante, les moyens de multiplexage forment un paquet composite, associé à un instant de transmission donné, en agrégeant des paquets élémentaires urgents stockés dans les buffers d'entrée jusqu'à épuisement de ceux-ci ou arrivée à échéance de l'instant de transmission.

En cas d'épuisement des paquets élémentaires urgents avant l'arrivée à échéance de l'instant de transmission, les moyens de multiplexage peuvent alors compléter le paquet composite par des paquets élémentaires non urgents et/ou des bits de bourrage.

Selon une troisième variante, cumulative ou alternative des première et seconde variantes, les paquets élémentaires sont classés en différentes catégories en fonction de leur urgence et que les moyens de multiplexage forment un paquet composite à partir de paquets élémentaires appartenant à une même catégorie.

En outre, les moyens de multiplexage peuvent insérer un entête au début du paquet composite indiquant les adresses respectives des paquets élémentaires agrégés dans ce paquet.

Enfin, les moyens de multiplexage peuvent aussi insérer dans chaque paquet composite un drapeau indiquant que ce paquet appartient à une communication MTC.

Avantageusement, la passerelle peut en outre comprendre un contrôleur destiné à surveiller les flux de paquets élémentaires en entrée et les flux de paquets composites en sortie, et déterminer pour chaque type de flux du réseau cellulaire, le nombre de buffers de sorties qui lui sont associés.

Les moyens d'ordonnancement transmettent les paquets composites sur la voie montante aux instants respectifs déterminés par les moyens de régulation de flux.

La passerelle peut être également adaptée à recevoir un flux de paquets composites du réseau cellulaire, à les décomposer en paquets élémentaires et à transmettre au réseau capillaire les paquets élémentaires ainsi obtenus.

Dans un mode de réalisation particulier, le réseau cellulaire envisagé ci-dessus est un réseau 3GPP LTE.

### BRÈVE DESCRIPTION DES DESSINS

La Fig. 1 déjà décrite représente de manière schématique l'architecture d'un système de communication MTC connu de l'état de la technique ;
La Fig. 2 représente un organigramme d'une méthode de gestion de flux dans une passerelle capillaire, selon un mode de réalisation de l'invention ;
La Fig. 3 représente une passerelle capillaire selon un mode de réalisation de l'invention.

### EXPOSÉ DÉTAILLÉ DE MODES DE RÉALISATION PARTICULIERS

Nous considérerons à nouveau dans la suite un système de communication MTC comprenant un réseau capillaire de dispositifs communicants (capteurs, détecteurs, compteurs etc. équipés par exemple de cartes SIM), un réseau cellulaire et une passerelle MTC interfaçant le réseau capillaire à un point d'accès du réseau cellulaire.

Le réseau cellulaire est par exemple un réseau 3GPP LTE mais d'autres types de réseaux cellulaires peuvent être envisagés sans sortir du cadre de la présente invention. Dans tous les cas, nous supposerons que le réseau cellulaire peut supporter différents types de flux (ou trafic) tels que VoIP (*Voice over IP*), NRTV (*Near Real Time Video*), HTTP (*HyperText Transfer Protocol*), FTP (*File Transfer Protocol*), gaming, etc.

Parmi les types de flux, on distinguera ceux qui appartiennent à la catégorie temps réel, tels que VoIP ou NRTV, assujettis à des contraintes de latence et ceux, tels que FTP, qui sont simplement assujettis à une contrainte de meilleur effort (*Best Effort*).

Dans le cas d'un flux temps réel, chaque paquet comporte généralement une information de temps de vie ou TTL (*Time To Live*), qui donne le temps auquel le paquet doit parvenir au plus tard à son destinataire. Si, à un noeud quelconque du réseau, le temps de routage restant excède le temps de vie, le paquet est tout simplement éliminé par le noeud en question. Par exemple, dans un flux VoIP le temps de latence maximal d'un paquet est typiquement de 20 ms.

Dans le cas d'un flux de type « *Best Effort* », le temps d'arrivée du paquet n'est pas critique. Ainsi, un paquet appartenant à un flux de ce type sera acheminé lorsque tous les paquets disponibles appartenant à des flux temps réel auront été préalablement transmis.

De manière générale, les différents types de flux sont caractérisés par des paramètres déterministes (taille, périodicité ou nombre de paquets dans une trame, temps de latence maximal pour un flux temps réel) ou des paramètres statistiques (taille de paquets, intervalle entre paquets, nombre de paquets au sein d'une trame etc.). Une présentation des différents types de flux et de leurs paramètres respectifs pourra être trouvée par exemple dans le document 3GPP TSG-RAN #48, Orange et al., « R1-070674, LTE physical layer framework for performance verification », 12th-16th Feb. 2007, St Louis, USA.

L'idée à la base de la présente invention est de prévoir une gestion de flux dans la passerelle MTC entre le réseau capillaire et le réseau cellulaire. Cette gestion de flux agrège les paquets de données issus du réseau capillaire de manière à simuler un type de trafic existant du réseau cellulaire, comme décrit ci-après.

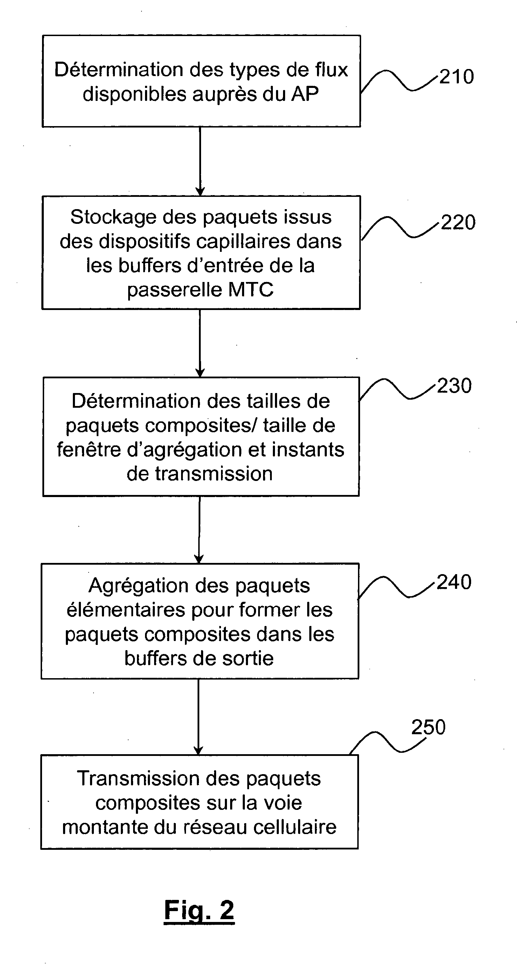

La Fig. 2 représente un organigramme de la méthode de gestion de flux dans une passerelle capillaire selon un mode de réalisation de l'invention.

Dans une première étape 210, la passerelle MTC détermine une liste de types de flux disponibles au point d'accès du réseau cellulaire auquel elle est reliée. Cette liste peut être obtenue au moyen d'une requête spécifique transmise au point d'accès et être mise à jour à intervalles réguliers. Alternativement elle peut faire l'objet d'une négociation entre la passerelle MTC et le point d'accès.

Dans une seconde étape, 220, la passerelle MTC reçoit des paquets issus des différents dispositifs du réseau capillaire et les stockent dans des buffers d'entrée. Chaque paquet comprend une entête indiquant le dispositif du réseau capillaire qui en est la source. L'homme du métier comprendra que les buffers d'entrée peuvent être des buffers physiques (registres, zones de mémoire) ou bien des buffers logiques. Dans ce dernier cas, les paquets sont stockés dans une mémoire avec une étiquette indiquant le numéro de buffer.

Dans un exemple de réalisation, les buffers d'entrée sont classés en deux groupes. On stocke dans les buffers du premier groupe les paquets non urgents (généralement émis avec une faible récurrence) indiquant le bon fonctionnement des différents dispositifs et l'on stocke dans les buffers du second groupe les paquets urgents, autrement dit à contrainte de faible latence, correspondant à une alarme ou à la survenance d'un événement. La distinction entre les deux types de paquet peut être faite par exemple au moyen d'une lecture de l'entête.

On génère ensuite un ou plusieurs flux, chaque flux étant associé à un buffer de sortie de la passerelle MTC.

Comme détaillé plus loin, des paquets stockés dans les buffers d'entrée, dénommés ci-après paquets élémentaires, sont agrégés au sein d'un paquet composite et ce paquet composite est stocké dans un buffer de sortie.

Dans une troisième étape 230, on détermine la taille du paquet composite à stocker dans chaque buffer de sortie. La taille de ce paquet est obtenue à partir des paramètres du flux associé au buffer en question.

La taille peut être une valeur fixe ou bien résulter d'un tirage aléatoire obéissant la loi de probabilité (de taille de paquet) relative au type de flux. Alternativement, la taille du paquet composite peut dépendre de la durée d'une fenêtre temporelle d'agrégation. Dans ce dernier cas, on agrège tous les paquets, voire seulement les paquets d'un certain type (temps réel, par exemple), reçus pendant cette fenêtre temporelle.

En outre, à chaque paquet composite est avantageusement attribuée une étiquette temporelle de transmission (*transmission timestamp*). Cette étiquette temporelle indique à quel instant la passerelle MTC doit transmettre le paquet en question au point d'accès. Les instants de transmission des paquets composites stockés dans un buffer de sortie sont déterminés à partir des paramètres du trafic associés à ce buffer.

Dans une quatrième étape, 240, on forme les paquets composites en agrégeant des paquets élémentaires, stockés dans les buffers d'entrée. Le cas échéant, on ajoute au début du paquet composite une entête donnant l'adresse de début de chaque paquet élémentaire à l'intérieur du paquet composite. Un drapeau peut être placé dans l'entête pour signaler que le paquet est relatif à une communication M2M et doit par conséquent subir un traitement particulier à la réception.

Les paquets élémentaires peuvent être par exemple simplement concaténés pour former le paquet composite. Des bits de bourrage peuvent être également ajoutés pour permettre d'atteindre la taille de paquet requise.

Selon une première variante, on forme le paquet composite associé à l'instant de transmission le plus proche en agrégeant des paquets urgents stockés dans les buffers d'entrée. Si cette agrégation ne permet pas d'atteindre la taille de paquet requise avant l'instant de transmission (éventuellement réduit d'une marge de sécurité), on complète avec des paquets élémentaires non-urgents et/ou avec des bits de bourrage.

Selon une seconde variante, on agrège les paquets élémentaires catégorie par catégorie. Par exemple, les paquets élémentaires qui correspondent à des flux temps réel à faible débit sont tous agrégés dans des paquets composites appartenant à des flux « VoIP ». De manière similaire, tous les paquets élémentaires qui correspondent à des flux temps réel à fort débit sont tous agrégés dans des paquets composites appartenant à des flux de type « video streaming ». Enfin tous les paquets élémentaires n'obéissant pas à une contrainte de temps réel sont agrégés dans des paquets composites appartenant à des flux de type « FTP ».

Dans une dernière étape, 250, la passerelle MTC transmet les paquets composites, à l'instant de transmission prévu, sur la voie montante du réseau cellulaire.

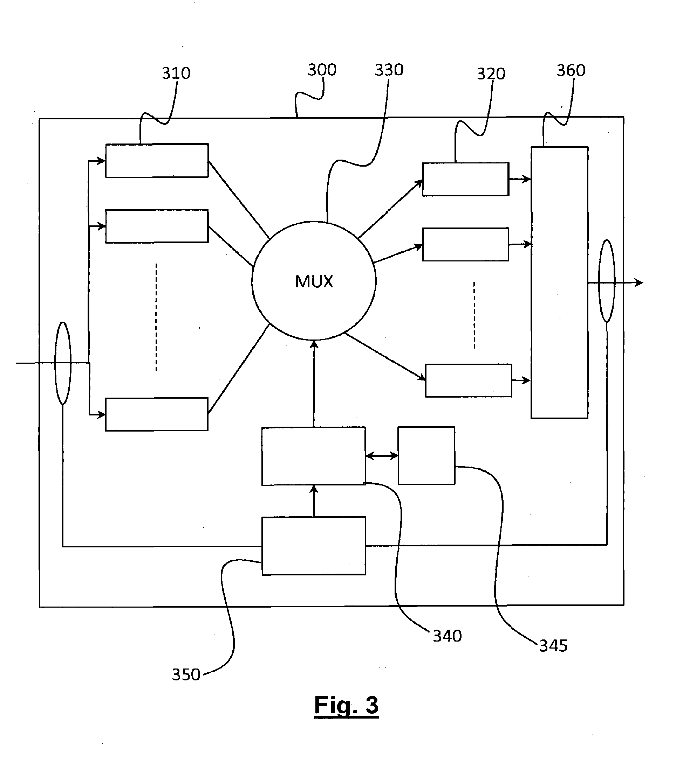

La Fig. 3 représente une passerelle MTC selon un mode de réalisation de l'invention. Cette passerelle a pour rôle, comme en Fig. 1, de réaliser l'interface entre le réseau capillaire M2M et un point d'accès du réseau cellulaire.

Toutefois, à la différence de l'art antérieur, la passerelle 300 effectue une gestion des flux de paquets en provenance du réseau capillaire, autrement dit des flux sur la voie montante.

Pour ce faire, la passerelle comprend une pluralité de buffers d'entrée, 310, dans lesquels sont stockés les paquets arrivant des différents dispositifs M2M. Le cas échéant, les buffers d'entrée sont organisés en différents groupes correspondant à différentes catégories de flux. Par exemple, un premier groupe de buffers 310 peut être dédié aux flux temps réel et un second groupe aux autres flux (best effort).

La passerelle 300 comprend également une pluralité de buffers de sortie, 320, chaque buffer de sortie étant associé à un type de flux existant du réseau cellulaire, par exemple VoIP, FTP, http, video streaming, etc. On notera que plusieurs buffers de sortie peuvent être associés à un même type de flux.

Un multiplexeur, 330, transfère les paquets stockés dans les buffers d'entrée vers les buffers de sortie en fonction de consignes d'agrégation fournies par le régulateur de flux 340. Autrement dit, le multiplexeur 330 agrège les paquets élémentaires pour former des paquets composites au sens défini plus haut. Des bits de bourrage peuvent être également insérés dans le paquet composite par le multiplexeur 330 pour permettre d'atteindre la taille de paquet déterminée par le régulateur de flux (*traffic shaper*) 340. En outre, le multiplexeur 330 peut avantageusement ajouter une entête donnant les adresses des paquets élémentaires au sein du paquet composite.

Le régulateur de flux 340 détermine la taille des paquets composites et/ou la largeur de la fenêtre temporelle d'agrégation des paquets élémentaires. Il détermine également, le cas échéant, les instants de transmission des paquets composites sur la voie montante. La taille des paquets composites et les instants de transmission sont obtenus au moyen des paramètres déterministes ou statistiques modélisant les différents types de trafic, stockés dans la table 345.

Selon une première variante, le multiplexeur agrège les paquets urgents stockés dans les buffers d'entrée (buffers du premier groupe). Si cette agrégation ne permet pas d'atteindre la taille de paquet requise avant l'instant de transmission prévu (le cas échéant diminué d'une marge de sécurité), le multiplexeur 300 continue le processus d'agrégation avec des paquets élémentaires non-urgents et/ou en complétant avec des bits de bourrage.

Selon une seconde variante, le multiplexeur 330 agrège les paquets élémentaires catégorie par catégorie. Par exemple, le multiplexeur agrège les paquets élémentaires correspondant à des flux temps réel à faible débit qui sont agrégés dans un buffer de sortie correspondant à un flux de type VoIP. De manière similaire, le multiplexeur agrège les paquets élémentaires correspondant à des flux temps réel à fort débit dans un buffer de sortie correspondant à un flux de type « video streaming ». Enfin, le multiplexeur peut, par exemple, agréger tous les paquets élémentaires n'obéissant pas à une contrainte de temps réel dans un ou des buffer(s) de sortie correspondant à un flux de type FTP ou http.

Un ordonnanceur (*scheduler*), 360, transmet les paquets composites sur les ressources de transmission de la voie montante du réseau cellulaire (intervalles de sous-porteuses d'un multiplex OFDM dans le cas d'un réseau cellulaire 3GPP LTE) qui sont allouées aux différents flux, et ce aux instants de transmission déterminés par le régulateur de flux 340.

Optionnellement, un contrôleur 350 surveille les flux de paquets en entrée et les flux de paquets composites en sortie de la passerelle 300. En fonction des types de flux observés ainsi que de leurs débits respectifs, d'une part, et des types de flux autorisés par le point d'accès, d'autre part, le contrôleur détermine le nombre de buffers de sortie pour chaque type, autrement dit le nombre de flux pour chaque type.

Par exemple, si les flux d'entrée ne sont pas temps réel, aucun buffer de sortie ne sera associé à un flux de type VoIP. De manière similaire, si le débit des flux temps réel en entrée augmente, le nombre de buffers de sortie associés à un flux de type VoIP sera augmenté en conséquence par le contrôleur. En outre, le contrôleur optimise le nombre de buffers de sortie pour chaque type de manière à maximiser le ratio moyen charge utile/taille de paquet ou de manière équivalente à réduire le débit moyen de bits de bourrage. Ainsi, le nombre de buffers peut varier de manière adaptative dans le temps.

L'homme du métier comprend ainsi que la passerelle est vue par le réseau cellulaire comme un équipement d'utilisateur (UE) classique, supportant plusieurs communications en parallèle (*radio bearers*). Cela permet, d'une part, de ne pas avoir à ajouter des types de flux spécifiques pour les communications M2M et, d'autre part, de dissimuler les caractéristiques des flux M2M en les incorporant dans des flux de types existants. Ainsi, il est sensiblement plus difficile de faire une analyse du trafic afin d'identifier les communications M2M.

La passerelle peut elle-même recevoir un flux de paquets composites sur la voie descendante, par exemple d'une seconde passerelle interfaçant un autre réseau capillaire avec le réseau cellulaire (*gateway to gateway communication*). Dans ce cas, la passerelle décompose chaque paquet composite de ce flux en paquets élémentaires, puis les transmet au réseau capillaire qui se charge de les router à destination, en fonction de leurs identifiants respectifs. La décomposition en paquets élémentaires est réalisée à partir des adresses de ces paquets dans l'entête du paquet composite. Le cas échéant, la décomposition en paquets élémentaires n'est effectuée que dans la mesure où la passerelle détecte un drapeau indiquant que le paquet reçu est un paquet composite.

## Revendications

1. Passerelle pour interfacer un réseau capillaire de dispositifs communicants avec un point d'accès d'un réseau cellulaire, **caractérisée en ce qu'**elle comprend :
- une pluralité de buffers d'entrée (310) destinés à stocker des paquets, dits paquets élémentaires, issus des dispositifs communicants ;
- une pluralité de buffers de sortie (320) destinés à stocker des paquets composites, lesdits paquets composites étant formés par agrégation de paquets élémentaires, chaque buffer de sortie étant associé à un type de flux du réseau cellulaire ;
- des moyens de régulation de flux (340) déterminant, pour chaque buffer de sortie, des paramètres de taille et/ou de temps de transmission des paquets composites de manière à ce que le flux de ces paquets soit conforme au type de flux du réseau cellulaire associé au buffer de sortie ;
- des moyens de multiplexage (330) pour transférer et agréger des paquets élémentaires, stockés dans les buffers d'entrée, sous forme de paquets composites ayant les paramètres déterminés par les moyens de régulation de flux ;
- des moyens d'ordonnancement (360) pour transmettre les paquets composites au moyen de ressources de transmission du réseau cellulaire.

2. Passerelle selon la revendication 1, **caractérisée en ce que** les moyens de régulation de flux déterminent la taille des paquets composites et les instants auxquels ils doivent être transmis en fonction de paramètres déterministes ou aléatoires d'un flux du réseau cellulaire.

3. Passerelle selon la revendication 1 ou 2, **caractérisée en ce que** le type de flux du réseau cellulaire appartient à l'ensemble constitué par : VoIP, NRTV, http, FTP, « video streaming », « gaming ».

4. Passerelle selon l'une des revendications précédentes, **caractérisée en ce que** les moyens de multiplexage forment un paquet composite en agrégeant des paquets élémentaires et complètent ce paquet à l'aide de bits de bourrage pour obtenir la taille déterminée par les moyens de régulation de flux.

5. Passerelle selon l'une des revendications 1 à 3, **caractérisée en ce que** les moyens de multiplexage forment un paquet composite, associé à un instant de transmission donné, en agrégeant des paquets élémentaires urgents stockés dans les buffers d'entrée jusqu'à épuisement de ceux-ci ou arrivée à échéance de l'instant de transmission.

6. Passerelle selon la revendication 5, **caractérisée en ce qu'**en cas d'épuisement des paquets élémentaires urgents avant l'arrivée à échéance de l'instant de transmission, les moyens de multiplexage complètent le paquet composite par des paquets élémentaires non urgents et/ou des bits de bourrage.

7. Passerelle selon l'une des revendications 1 à 3, **caractérisée en ce que** les paquets élémentaires sont classés en différentes catégories en fonction de leur urgence et que les moyens de multiplexage forment un paquet composite à partir de paquets élémentaires appartenant à une même catégorie.

8. Passerelle selon l'une des revendications précédentes, **caractérisée en ce que** les moyens de multiplexage insèrent un entête au début du paquet composite indiquant les adresses respectives des paquets élémentaires agrégés dans ce paquet.

9. Passerelle selon l'une des revendications précédentes, **caractérisée en ce que** les moyens de multiplexage insèrent dans chaque paquet composite un drapeau indiquant que ce paquet appartient à une communication MTC.

10. Passerelle selon l'une des revendications précédentes, **caractérisée en ce qu'**elle comprend en outre un contrôleur (350) destiné à surveiller les flux de paquets élémentaires en entrée et les flux de paquets composites en sortie, et détermine pour chaque type de flux du réseau cellulaire, le nombre de buffers de sorties qui lui sont associés.

11. Passerelle selon la revendication 2, **caractérisée en ce que** les moyens d'ordonnancement (360) transmettent les paquets composites sur la voie montante aux instants respectifs déterminés par les moyens de régulation de flux (340).

12. Passerelle selon la revendication 1, **caractérisée en ce qu'**elle est adaptée à recevoir un flux de paquets composites du réseau cellulaire, à les décomposer en paquets élémentaires et à transmettre au réseau capillaire les paquets élémentaires ainsi obtenus.

13. Passerelle selon l'une des revendications précédentes, **caractérisée en ce que** le réseau cellulaire est un réseau 3GPP LTE.

## Patentansprüche

1. Schnittstelle zum Bilden eines Interface für ein kapillares Netzwerk von kommunizierenden Vorrichtungen mit einem Zugangspunkt eines zellulären Netzwerks, **dadurch gekennzeichnet, dass** sie umfasst:
- eine Mehrzahl von Eingangspuffern (310), die dazu ausgelegt sind, als Elementarpakete bezeichnete Pakete zu speichern, die von den kommunizierenden Vorrichtungen stammen;
- eine Mehrzahl von Ausgangspuffern (320), die dazu ausgelegt sind, Verbundpakete zu speichern, wobei die Verbundpakete durch Aggregation von Elementarpaketen gebildet sind, wobei jeder Ausgangspuffer einem Datenflusstyp des zellulären Netzwerks zugeordnet ist;
Mittel zur Regelung des Datenflusses (340), die für jeden Ausgangspuffer Größen- und/oder Sendezeitparameter der Verbundpakete derart bestimmen, dass der Datenfluss dieser Pakete konform ist mit dem Datenfluss des zellulären Netzwerks, welches dem Ausgangspuffer zugeordnet ist;
- Multiplexierungsmittel (330) zum Transferieren und Aggregieren der Elementarpakete, die in den Eingangspuffern gespeichert sind, in Form von Verbundpaketen, die die durch die Datenflussregelungsmittel bestimmten Parameter haben;
- Reihungsmittel (360) zum Senden der Verbundpakete mittels Senderessourcen des zellulären Netzwerks.

2. Schnittstelle nach Anspruch 1, **dadurch gekennzeichnet, dass** die Datenflussregelungsmittel die Größe der Verbundpakete und die Zeitpunkte, an denen sie gesendet werden müssen, als Funktion von deterministischen oder zufälligen Parametern eines Datenflusses des zellulären Netzwerks bestimmen.

3. Schnittstelle nach Anspruch 1 oder 2, **dadurch gekennzeichnet, dass** der Datenflusstyp des zellulären Netzwerks zu der Gruppe gehört gebildet durch: VoIP, NRTV, http, FTP, «video streaming», »gaming«.

4. Schnittstelle nach einem der vorhergehenden Ansprüche, **dadurch gekennzeichnet, dass** die Multiplexierungsmittel ein Verbundpaket durch Aggregieren der Elementarpakete bilden und dieses Paket mithilfe von Füllbits vervollständigen, um die durch die Datenflussregelungsmittel bestimmte Größe zu erhalten.

5. Schnittstelle nach einem der Ansprüche 1 bis 3, **dadurch gekennzeichnet, dass** die Multiplexierungsmittel ein Verbundpaket, das einem gegebenen Sendezeitpunkt zugeordnet ist, durch Aggregieren von eiligen Elementarpaketen bilden, die in den Eingangspuffern gespeichert sind, bis zu deren Ausschöpfung oder Eintreten der Fälligkeit des Sendezeitpunkts.

6. Schnittstelle nach Anspruch 5, **dadurch gekennzeichnet, dass** im Fall der Ausschöpfung der eiligen Elementarpakete vor dem Eintreten der Fälligkeit des Sendezeitpunkts die Multiplexierungsmittel das Verbundpaket durch nicht-eilige Elementarpakete und/oder durch Füllbits vervollständigen.

7. Schnittstelle nach einem der Ansprüche 1 bis 3, **dadurch gekennzeichnet, dass** die Elementarpakete als Funktion ihrer Dringlichkeit in verschiedenen Kategorien klassifiziert sind, und dass die Multiplexierungsmittel ein Verbundpaket ausgehend von Elementarpaketen bilden, die zu ein und derselben Kategorie gehören.

8. Schnittstelle nach einem der vorhergehenden Ansprüche, **dadurch gekennzeichnet, dass** die Multiplexierungsmittel einen Kopf am Anfang des Verbundpakets einfügen, der die jeweiligen Adressen der in diesem Paket aggregierten Elementarpakete angibt.

9. Schnittstelle nach einem der vorhergehenden Ansprüche, **dadurch gekennzeichnet, dass** die Multiplexierungsmittel in jedes Verbundpaket ein Flag einfügen, welches angibt, dass dieses Paket zu einer MTC-Kommunikation gehört.

10. Schnittstelle nach einem der vorhergehenden Ansprüche, **dadurch gekennzeichnet, dass** sie ferner einen Controller (350) umfasst, der dazu ausgelegt ist, die Datenflüsse von Elementarpaketen am Eingang und die Datenflüsse von Verbundpaketen am Ausgang zu überwachen, und für jeden Datenflusstyp des zellulären Netzwerks die Zahl von Ausgangspuffern bestimmt, die ihm zugeordnet sind.

11. Schnittstelle nach Anspruch 2, **dadurch gekennzeichnet, dass** die Reihungsmittel (360) die Verbundpakete an den durch die Datenflussreglungsmittel (340) bestimmten jeweiligen Zeitpunkten upstream übertragen.

12. Schnittstelle nach Anspruch 1, **dadurch gekennzeichnet, dass** sie dazu ausgelegt ist, einen Datenfluss von Verbundpaketen vom zellulären Netzwerk zu empfangen, sie in Elementarpakete zu zerlegen und die derart erhaltenen Elementarpakete an das kapillare Netzwerk zu übertragen.

13. Schnittstelle nach einem der vorhergehenden Ansprüche, **dadurch gekennzeichnet, dass** das zelluläre Netzwerk ein 3GPP-LTE-Netzwerk ist.

## Claims

1. A gateway for interfacing a capillary network of communicating devices with an access point of a cellular network, **characterised in that** it comprises:
- a plurality of input buffers (310) designed to store packets, referred to as elementary packets, originating from the communicating devices;
- a plurality of output buffers (320) designed to store composite packets, said composite packets being formed by aggregation of elementary packets, each output buffer being associated with a type of flow of the cellular network;
- flow regulation means (340) determining, for each output buffer, parameters of size and/or transmission times of the composite packets such that the flow of these packets is consistent with the type of flow of the cellular network associated with the output buffer;
- multiplexing means (330) for transferring and aggregating elementary packets, stored in the input buffers, in the form of composite packets having the parameters determined by the flow regulation means;
- scheduling means (360) for transmitting the composite packets by means of the transmission resources of the cellular network.

2. The gateway according to Claim 1, **characterised in that** the flow regulation means determine the size of composite packets and the instants at which they must be transmitted as a function of deterministic or random parameters of flow of the cellular network.

3. The gateway according to Claim 1 or 2, **characterised in that** the type of flow of the cellular network belongs to the set comprising: VoIP, NRTV, http, FTP, video streaming, gaming.

4. The gateway according to any one of the preceding claims, **characterised in that** the multiplexing means form a composite packet by aggregating elementary packets and complete this packet by means of dummy bits to obtain the size determined by the flow regulation means.

5. The gateway according to any one of Claims 1 to 3, **characterised in that** the multiplexing means form a composite packet, associated with a given transmission instant, by aggregating elementary urgent packets stored in the input buffers until the latter are exhausted or the transmission instant has been reached.

6. The gateway according to Claim 5, **characterised in that** in the event of exhaustion of the urgent elementary packets prior to the transmission instant being reached, the multiplexing means complete the composite packet by non-urgent elementary packets and/or dummy bits.

7. The gateway according to any one of Claims 1 to 3, **characterised in that** the elementary packets are classified into different categories as a function of their urgency and the multiplexing means form a composite packet from elementary packets belonging to the same category.

8. The gateway according to any one of the preceding claims, **characterised in that** the multiplexing means insert a header at the start of the composite packet indicating the respective addresses of the elementary packets aggregated in this packet.

9. The gateway according to any one of the preceding claims, **characterised in that** the multiplexing means insert into each composite packet a flag indicating that this packet belongs to a MTC communication.

10. The gateway according to any one of the preceding claims, **characterised in that** it also comprises a controller (350) designed to monitor the flow of elementary packets at input and the flow of composite packets at output, and determines for each type of flow of the cellular network the number of output buffers which are associated therewith.

11. The gateway according to Claim 2, **characterised in that** the scheduling means (360) transmit the composite packets over the uplink at the respective instants determined by the flow regulation means (340).

12. The gateway according to Claim 1, **characterised in that** it is adapted to receive a flow of composite packets of the cellular network, decompose the latter into elementary packets and transmit the resulting elementary packets to the capillary network.

13. The gateway according to any one of the preceding claims, **characterised in that** the cellular network is a 3GPP LTE network.
